# EUROPÄISCHE PATENTANMELDUNG

(11) **EP 2 277 614 A1**
(43) Veröffentlichungstag der Anmeldung: **26.01.2011**
(21) Anmeldenummer: 10007608.2
(22) Anmeldetag: 22.07.2010
(51) Int. Cl.: B01D 53/00, B01D 53/26, C10L 3/08, F25J 3/06

(54) **Verfahren zum Reinigen und Verflüssigen von Biogas**

(30) Priorität: 22.07.2009 AT 45909 U
(71) Anmelder: LO Solutions GmbH, 7111 Parndorf (AT)
(72) Erfinder: Hermeling, Werner, 7100 Neusiedl am See (AT)
(74) Vertreter: Haffner und Keschmann Patentanwälte OG

(57) **Zusammenfassung**

Ein Verfahren zum Reinigen und Verflüssigen von Biogas zeichnet sich dadurch aus, dass das Biogas fraktioniert verflüssigt wird, wobei eine Abkühlung in einer ersten Stufe mit einem Wärmetauscher auf die Taupunkttemperatur von Wasser vorgenommen wird, dass in einer anschließenden mechanischen Trennung, wie z.B in einer Zyklonstufe, im Schwebezustand gebildete Feststoffe abgetrennt werden, so dass ein Anhaften an der Wandung nicht oder nur sehr beschränkt möglich ist und in wenigstens einer Kühlstufe unter Zusatz von kaltem CH₄ vorzugsweise im Anschluss an die Zyklonstufe der Druck zur Unterbindung der CO₂-Schneebildung auf ≥ 5,6 bar eingestellt wird und die Temperatur über Wärmetauscher weiter abgesenkt wird, sodass CO₂ an verbleibenden Kondensationskeimen, wie z.B. Eiskristallen, kondensiert, worauf das verflüssigte CO₂ ausgetragen wird, das Biogas unter Verflüssigung weiter gekühlt wird und ein Teilstrom des Biogases zur Kühlung des Biogasstroms verwendet wird.

## Beschreibung

Die Erfindung betrifft ein Verfahren zum Reinigen und Verflüssigen von Biogas.

Biogas wird prinzipiell nach verschiedensten Verfahren gereinigt. Zumeist handelt es sich um Filterverfahren oder Verfahren, bei welchen Verunreinigungen ausgewaschen oder absorbiert werden. Neben Gaswäschen sind vor allen Dingen Adsorptionsverfahren und Diffusionsverfahren und deren Modifikationen bekannt. Prinzipiell ist in der organischen Chemie selbstverständlich auch bei entsprechenden Voraussetzungen eine fraktionierte Kristallisation oder eine fraktionierte Kondensation zu Reinigungszwecken geeignet. Bei Biogas, welches hauptsächlich aus Methan besteht, sind bisher keine verlustfreien Verfahren bekannt geworden, und alle bekannten Verfahren haben zu mehr oder minder großen Verlusten an Methan geführt. Biogas besteht hauptsächlich aus Methan, wobei weiters H₂O, CO₂ und NH₄ sowie Schwefelverbindungen im Biogas ungereinigt vorliegen. Die Schwefelverbindungen können in der Biogasanlage auf biologischem Weg abgebaut werden. Die verbleibenden Verunreinigungen sollen durch andere Verfahren abgetrennt werden, ohne dass hierbei ein Methanverlust auftritt. Prinzipiell verfügen die einzelnen Bestandteile über unterschiedliche Kondensationspunkte. Kondensation wird durch Kühlung und Druckerhöhung möglich. Mit abnehmendem Partialdruck sinken die Taupunkte der Gase und es wird deshalb zum Erreichen der Kondensation die Temperatur des Gasgemisches entsprechend gesenkt. Mit Rücksicht auf das Vorliegen von CO₂ und H₂O sind aber derartige Verfahren insofern problematisch, als mit der Bildung von CO₂-Schnee und festen Produkten gerechnet werden muss, welche die Anlage verstopfen und eine reibungslose Funktionsweise beeinträchtigen.

Als Kühlmittel wird häufig Stickstoff eingesetzt, der verdampft wird und dem Gasgemisch die Verdampfungswärme entzieht. Gasförmiger Stickstoff kann als Abfallprodukt umweltneutral in die Atmosphäre abgeblasen werden oder aber mit einer Rückverflüssigungsanlage wieder verflüssigt werden. Mit Ausnahme von Stickstoff sind alle Fraktionen theoretisch partiell abscheidbar. Stickstoff könnte in der Gasphase verbleiben aber lediglich in einer so geringen Konzentration, dass dies für kommerzielle Verwertungen ohne Bedeutung ist.

Zur Lösung des erfindungsgemäßen Ziels, Biogas verlustfrei zu reinigen und zu verflüssigen, wird erfindungsgemäß vorgeschlagen, dass das Biogas fraktioniert verflüssigt wird, wobei eine Abkühlung in einer ersten Stufe mit einem Wärmetauscher auf die Taupunkttemperatur von Wasser vorgenommen wird, dass in einer anschließenden mechanischen Trennung, wie z.B in einer Zyklonstufe, im Schwebezustand gebildete Feststoffe abgetrennt werden, so dass ein Anhaften an der Wandung nicht oder nur sehr beschränkt möglich ist, und in wenigstens einer nachfolgenden Kühlstufe unter Zusatz von kaltem CH₄ der Druck zur Unterbindung der CO₂-Schneebildung auf ≥ 5,6 bar eingestellt wird und die Temperatur über Wärmetauscher weiter abgesenkt wird, sodass CO₂ an verbleibenden Kondensationskeimen, wie z.B. Eiskristallen, kondensiert, worauf das verflüssigte CO₂ ausgetragen wird, das Biogas unter Verflüssigung weiter gekühlt wird und ein Teilstrom des Biogases zur Kühlung des Biogasstroms verwendet wird, wobei vorzugsweise das gasförmige Methan im Kreislauf geführt wird und insbesondere der Zyklonstufe rückgeführt wird.

Dadurch, dass zunächst Wasser durch Kondensation abgeschieden wird, wird in der Regel nicht vollständig vermieden, dass hier auch Feststoffe in Form von Eispartikeln auftreten. Dadurch, dass nun eine Zyklonstufe zur Abscheidung derartiger Feststoffe zwischengeschaltet wird, bevor weiter gekühlt wird, und im Anschluss an eine derartige Zyklonstufe der Druck erhöht wird, wird die Ausbildung von CO₂-Schnee verhindert, und es wird sichergestellt, dass CO₂ tatsächlich flüssig ausfällt und kondensiert, wobei als Kondensationskeime kleine H₂O-Eispartikelchen, die vom Zyklon nicht abgeschieden wurden, dienen können. Das CO₂ wird somit flüssig mit den verbleibenden Kondensationskeimen ausgetragen, worauf das verbleibende Biogas abschließend über eine Drossel unter Verflüssigung entspannt wird, wobei verbleibendes kühles gasförmiges Methan im Kreislauf zur vorangehenden Kühlung eingesetzt werden kann und insbesondere der Zyklonstufe rückgeführt werden kann.

Das erfindungsgemäße Verfahren wird mit Vorteil so durchgeführt, dass das Methan nach Abscheiden von flüssigem CO₂ in einen Methanverflüssiger eingetragen wird, worin mit flüssigem Stickstoff gekühlt wird und Methangas-Stickstoff-Gemische sowie flüssiges Methan abgezogen werden. Zusammenfassend wird somit so vorgegangen, dass das Biogas mindestens auf Taupunkttemperatur gekühlt wird, wobei eine Eisbildung weitestgehend vermieden wird. Die Abkühlung erfolgt zuallererst bevorzugt über Wärmeübertrager gegen Wärmetauscher, welche mit kaltem Stickstoff gekühlt werden, über welche das zu kühlende Biogasgemisch strömt. Das ausfallende Wasser begleitet von verschiedenen Verschmutzungen wie NH₄, Partikeln etc. wird bevorzugt aufgefangen und als Abwasser abgeführt. Das vorgetrocknete Biogas wird anschließend in eine mechanische Trennvorrichtung, insbesondere einen zyklonähnlichen Behälter eingebracht, welcher bevorzugt gegen einströmende Wärme isoliert ist, und vorzugsweise mit bereits gekühltem Methan gemischt, wodurch es zu einem rotierenden Gasstrom und gewollter Kristallisation des verbliebenen Wassers kommt. Aus dem Schwebezustand der Rotation heraus werden dabei schwerere Kristalle an die Wand getragen und abgeschieden. Die leichten Kristalle verbleiben im Gasstrom und werden mit dem Abgasstrom aus dem Zyklon ausgetragen. Die nachfolgende Druckerhöhung dient dazu, dass bei weiterer Abkühlung kein CO₂-Schnee entstehen kann. Es wird somit CO₂ flüssig abgeschieden und dem Biogas weiter Wärme entzogen, sodass CO₂ kondensiert. Als Kondesationskeime fungieren hier erwartungsgemäß die mitgetragenen feinen Eiskristalle. Gasförmiger Stickstoff auf der einen Seite des Wärmeübertragers kühlt bevorzugter Weise das CO₂ auf der anderen Seite auf beispielsweise 173° K ab, sodass mit Sicherheit fast das ganze CO₂ flüssig abgeschieden wird. Das verflüssigte CO₂ wird aufgefangen und zweckdienlich weiterverarbeitet und beispielsweise mit einer Pumpe abgezogen und in Flaschen gefüllt. Unter Druck stehendes Methan kann aus dem Behälter abgezogen und weiter gekühlt werden. Außer Stickstoff sind alle weiteren Verunreinigungen weitestgehend abgeschieden, sodass nun eine zweistufige Kondensation eingeleitet werden kann, wobei in der ersten Stufe das Biogas bis kurz vor den Taupunkt gekühlt wird, wobei ein Teil des Gasstroms zur Kühlung des eintretenden Gasstroms verwendet wird und ein verbleibender Teil in einem weiteren Wärmeübertrager kondensiert wird. Das Kondensat hat hierbei einen Druck, der über dem Atmosphärendruck liegt und kann in bevorzugter Weise über eine Drossel auf Umgebungsdruck entspannt werden, wobei die beim Drosselprozess entstehende Gasphase vor Beginn der Gaskühlung in bevorzugter Weise mit dem zu kühlenden Biogas gemischt wird. Bei dieser Verfahrensweise konzentriert sich Stickstoff im unteren Teil des Verflüssigers und kann entsprechend der gewünschten Konzentration abgezogen werden, sodass das gewonnene CH₄N₂-Gemisch nur mehr geringe Stickstoffanteile enthält und einer konventionellen Verbrennung zugeführt werden kann. Das verflüssigte Methan ist weitestgehend verlustfrei hergestellt worden und stellt ein lager- und transportfähiges Endprodukt dar.

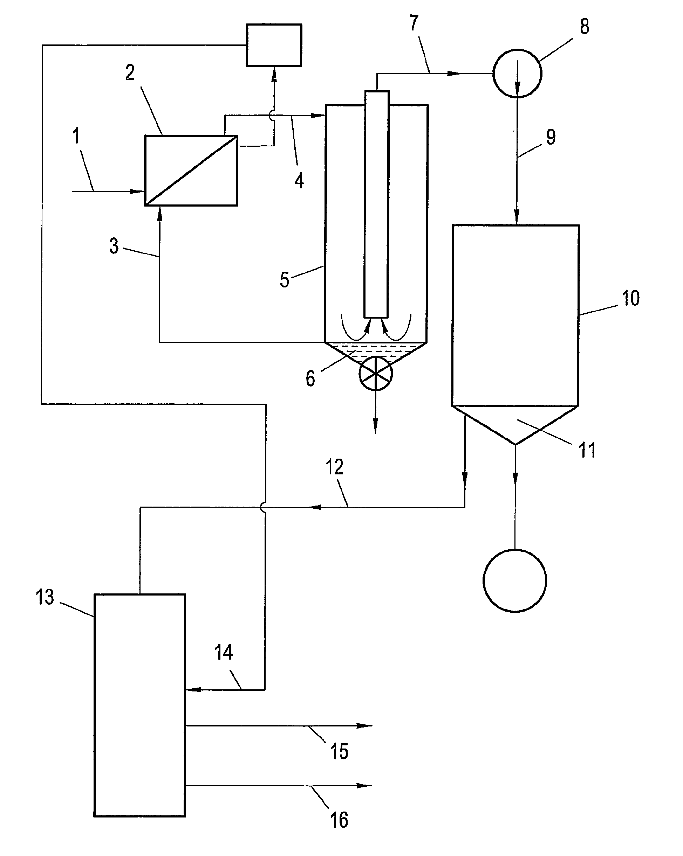

Die Erfindung wird nachfolgend anhand eines in der Zeichnung schematisch dargestellten Diagramms näher erläutert. In diesem zeigt 1 eine Rohgasleitung, welche einem Wasserabscheider 2 zugeführt wird, wobei dem Wasserabscheider 2 gasförmiger Stickstoff zu Kühlzwecken über eine Leitung 3 zugeführt wird. Das entsprechend gekühlte und getrocknete Biogas gelangt über die Leitung 4 in einen Zyklonabscheider, in welchem die Trocknung vervollständigt wird. Der Zyklonabscheider ist mit 5 bezeichnet, wobei grobe Partikel, und insbesondere Eisteilchen, gemeinsam mit weiterem kondensierten Wasser über die Wände abfließen und im Sumpf 6 gesammelt werden und über eine Zellradschleuse ausgetragen werden können. Das weitestgehend trockene und auf eine Temperatur von etwa -50° C gekühlte Biogas gelangt über die Leitung 7 zur einer Stufe 8, in welcher eine Druckerhöhung auf über 5,6 bar vorgenommen wird, um in der Folge bei weiterer Kühlung die Ausbildung von CO₂-Schnee zu vermeiden. Zur weiteren Kühlung kann hier kaltes Methan z.B. bis -120° C eingesetzt werden, worauf das Gemisch über die Leitung 9 in einen CO₂-Verflüssiger 10 gelangt. Flüssiges CO₂ wird wiederum im Sumpf 11 gesammelt und über eine Schleuse ausgetragen und kann in Flaschen abgefüllt werden. Das weitestgehend gereinigte gasförmige kalte Methan wird über die Leitung 12 in einen Methangasverflüssiger 13 übergeführt, welchem flüssiger Stickstoff über die Leitung 14 zugesetzt wird. In der Folge kann weitestgehend stickstofffreies Methan abgezogen werden. In einer mittleren Ebene kann Methan beispielsweise mit etwa 10% Stickstoff verunreinigt abgezogen werden, wobei diese Leitung mit 15 bezeichnet ist und dieses Biogas ohne weiteres verbrannt werden kann. Flüssiges Methan wird am Boden des Methanverflüssigers über die Leitung 16 ausgetragen. Mit einer Drossel erfolgt die Druckabsenkung nahe dem Umgebungsdruck. Die anfallende Methan - Gasphase wird in den Prozess zurück geführt, die Flüssigphase kann in entsprechende Tanks, Flaschen bzw. Behälter abgefüllt werden und zum Verbraucher verbracht werden.

## Patentansprüche

1. Verfahren zum Reinigen und Verflüssigen von Biogas, **dadurch gekennzeichnet, dass** das Biogas fraktioniert verflüssigt wird, wobei eine Abkühlung in einer ersten Stufe mit einem Wärmetauscher auf die Taupunkttemperatur von Wasser vorgenommen wird, dass in einer anschließenden mechanischen Trennung, wie z.B in einer Zyklonstufe, im Schwebezustand gebildete Feststoffe abgetrennt werden, so dass ein Anhaften an der Wandung nicht oder nur sehr beschränkt möglich ist, und in wenigstens einer nachfolgenden Kühlstufe unter Zusatz von kaltem CH₄ der Druck zur Unterbindung der CO₂-Schneebildung auf ≥ 5,6 bar eingestellt wird und die Temperatur über Wärmetauscher weiter abgesenkt wird, sodass CO₂ an verbleibenden Kondensationskeimen, wie z.B. Eiskristallen, kondensiert, worauf das verflüssigte CO₂ ausgetragen wird, das Biogas unter Verflüssigung weiter gekühlt wird und ein Teilstrom des Biogases zur Kühlung des Biogasstroms verwendet wird.

2. Verfahren nach Anspruch 1, **dadurch gekennzeichnet, dass** das Methan nach Abscheiden von flüssigem CO₂ in einen Methanverflüssiger eingetragen wird, worin mit flüssigem Stickstoff gekühlt wird und Methangas-Stickstoff-Gemische sowie flüssiges Methan abgezogen werden.

3. Verfahren nach Anspruch 1 oder 2, **dadurch gekennzeichnet, dass** das gasförmige Methan im Kreislauf geführt wird und insbesondere der Zyklonstufe rückgeführt wird.

4. Verfahren nach Anspruch 1,2 oder 3, **dadurch gekennzeichnet, dass** der Druck des verflüssigten Methans durch Drosselung verringert wird und die dabei anfallende Gasphase zur Kühlung des eintretenden Methangasstromes benutzt wird und die Flüssigphase in entsprechenden Tanks, Behältern, Flaschen der weiteren Verwendung zugeführt wird.
